# EUROPÄISCHE PATENTSCHRIFT

(11) **EP 2 141 134 B1**
(45) Veröffentlichungstag und Bekanntmachung des Hinweises auf die Patenterteilung: **15.05.2013**
(21) Anmeldenummer: 09008738.8
(22) Anmeldetag: 03.07.2009
(51) Int. Cl.: C03C 17/00, C03C 17/34, C03C 1/00, B44C 1/00

(54) **Versiegelungsschicht für Dekorschichten von Glas- oder Glaskeramik-Artikeln**
Sealing layer for decorative films on glass or glass-ceramic articles
Film d'étanchéité pour couches décoratives sur des articles en verre ou en vitrocéramique

(30) Priorität: 04.07.2008 DE 102008031426
(43) Veröffentlichungstag der Anmeldung: 06.01.2010
(73) Patentinhaber: Schott AG, 55122 Mainz (DE)
(72) Erfinder: Anton, Andrea, 55595 Hüffelsheim (DE); Bockmeyer, Matthias, 55116 Mainz (DE); Römer-Scheuermann, Gabriele, 55218 Ingelheim (DE); Schmitt, Hans-Joachim, 55437 Ockenheim (DE)
(74) Vertreter: Herden, Andreas F.

(56) Entgegenhaltungen:
- DE-A1- 10 355 160
- DE-A1-102005 018 246

## Beschreibung

Die Erfindung betrifft eine Versiegelungsschicht für Dekorschichten auf Glas- oder Glaskeramik-Artikeln, die starken thermischen und/oder chemischen und/oder mechanischen Belastungen ausgesetzt sind sowie ein Verfahren zur Herstellung dieser Versiegelungsschicht.

Glas- und insbesondere Glaskeramik-Artikel werden häufig in heißen Umgebungen, z.B. als Bestandteil von Kochfeldern, verwendet. Für die verwendeten dekorativen Beschichtungen, umfassend eine Dekor- und eine Versiegelungsschicht, ergeben sich daraus hohe Anforderungen an die Temperaturbeständigkeit der Materialien. Gleichzeitig müssen aber auch andere Faktoren wie beispielsweise die Haft- und Kratzfestigkeit, sowie die Dichtigkeit gegen den Durchtritt von Fluiden und Gasen, die beim Gebrauch des Artikels auftreten können, als auch gegen solche, die System-bedingt auftreten, berücksichtigt werden.

Gerätehersteller stellen besondere Anforderungen an die Klebefestigkeit des Systems Kleber/Kochfeld, die auch mit einer dekorativen Unterseitenbeschichtung, umfassend Dekorund Versiegelungsschicht, der Kochfelder erfüllt sein müssen; insbesondere darf es nicht zu einem Abreißen der Unterseitenbeschichtung vom Substrat kommen.

Gerätekomponenten der eingebauten Elektronik eines Kochfeldes können an der Unterseite der Glaskeramik, also bei unterseitenbeschichteten Kochflächen direkt an der Versiegelungsschicht, schaben oder kratzen.

Darüber hinaus muß die erzeugte Beschichtung dicht gegenüber flüssigen und ölhaltigen Substanzen, wie sie beispielsweise in Lebensmitteln vorkommen, sein. Es können aber auch System-bedingt bestimmte Stoffe auftreten, die keine nachteilige Wirkung auf den beschichteten Glas- oder Glaskeramik-Artikel haben dürfen. Hierbei ist beispielsweise an gasbeheizte Glaskeramik-Kochfelder gedacht, bei denen sich Schwefeloxide, die zusammen mit Wasser bei der Gasverbrennung entstehen, zu einer Säure umsetzten, die sowohl das Substrat als auch Dekor- und Versiegelungsschicht angreifen kann.

Dekorative Beschichtungen auf Glas und Glaskeramik, z.B. für den Einsatz als Unterseitenbeschichtung, mit und ohne Versiegelungsschicht sind bekannt. Im Allgemeinen wird eine erste farbgebende Schicht direkt auf den transparenten, nicht volumengefärbten Glas-/Glaskeramik-Artikel aufgebracht. Diese erste Schicht weist in der Regel eine gewisse Haft= und Kratzfestigkeit auf. Insbesondere die Dichtigkeit gegen Durchtritt flüssiger oder gasförmiger Medien ist jedoch bezogen auf die hohen Anforderungen im Bereich unterseitenbeschichteter Kochfelder meist nicht ausreichend. Deshalb wird häufig ein Zweischichtaufbau gewählt, indem die dekorative Beschichtung noch mit einer Versiegelungsschicht versehen wird.

Aus der EP 0729442 ist ein Verfahren zur Herstellung von funktionellen glasartigen, vorzugsweise farbigen oder kolloidgefärbten Schichten auf Substraten bekannt. Die funktionellen glasartigen Schichten werden durch Hydrolyse und Kondensation, z.B. auf der Basis eines Sol-Gel-Prozesses, aus hydrolisierbaren Silanen, Organosilanen und optionalen Verbindungen glasbildender Elemente, sowie molekulardispersen oder nanoskaligen Funktionsträgern hergestellt. Als farbgebende Elemente werden temperaturbeständige Farbstoffe und Pigmente, Metall- oder Nichtmetalloxide, färbenden Metallionen, Metall- oder Metallverbindungs-Kolloide und Metallionen, die unter Reduktionsbedingungen zu Metall-Kolloiden reagieren, genannt. Der Überzug aus einer Mischung dieser Komponenten wird auf ein Substrat aufgebracht und thermisch zu einer glasartigen Schicht verdichtet. Die Menge der jeweils zugegebenen Funktionsträger richtet sich dabei nach den gewünschten funktionellen Eigenschaften der zu erzeugenden Beschichtung, z.B. der gewünschten Farbintensität oder Opazität. Mit diesem Verfahren lassen sich rißfreie Beschichtungen mit hoher thermischer, mechanischer und chemischer Stabilität auf Metall-, Glas- und Keramikoberflächen erzeugen.

Es werden keine spezifischen Angaben zu Haftfestigkeit, Kratzfestigkeit und insbesondere der Dichtigkeit der erzeugten glasartigen Schichten gemacht, außer der nicht näher ausgeführten Aussage: "Die Möglichkeit der thermischen Verdichtung bei relativ hohen Temperaturen erlaubt die Herstellung von rißfreien Beschichtungen mit hoher thermischer, mechanischer und chemischer Stabilität auf Metall-, Glas- und Keramikoberflächen" (Sp.2, Z.25-29). Die Dichtigkeit der Dekorschicht bzw. der Versiegelungsschicht ist, z.B. bei einer Verwendung als Unterseitenbeschichtung für Glaskeramik-Kochfelder, ein wichtiges Kriterium für die Hersteller dieser Artikel, da mangelnde Dichtigkeit im Gebrauch optische Veränderungen bis hin zu Schäden am Glas- oder Glaskeramik-Substrat verursachen kann.

Die EP 1218202 beschreibt ein Verfahren zur Herstellung von bedruckten Substraten, bei dem eine Druckpaste bildmäßig auf ein Substrat aufgebracht und durch Wärmebehandlung (bevorzugt zwischen 400 und 800°C) verdichtet wird. Dieses Verfahren eignet sich für die Herstellung von leitfähigen Druckpasten, insbesondere leitfähigen Siebdruckpasten zum Bedrucken von Substraten mit leitfähigen Komponenten wie z.B. Leiterbahnen. Die Druckpaste umfasst ein nach dem Sol-Gel-Verfahren erhaltenes matrixbildendes Kondensat auf Basis von Polyorganosiloxanen und ein oder mehrere färbende, luminiszierende, leitfähige und/oder katalytisch wirksame Füllstoffe. Als Substrate können beliebige wärmebeständige Materialien, bevorzugt Keramik, Glaskeramik oder Glas, eingesetzt werden.

Die Forderung nach wärmebeständigen Materialien ist der Wärmebehandlung im Verlauf des Verfahrens geschuldet. Es werden keine Angaben gemacht, wie sich die nach dem erfindungsgemäßen Verfahren hergestellten Schichten bei dauerhaft hoher Temperaturbelastung, wie sie beispielsweise bei Unterseitenbeschichtungen von Kochfeldern auftritt, verhalten.

Die Menge des färbenden, lumineszierenden und/oder katalytisch wirksamen Füllstoffs richtet sich nach den gewünschten funktionellen Eigenschaften der Beschichtung, z.B. der gewünschten Farbintensität; nicht genannt werden Kriterien der Haftfestigkeit, Kratzfestigkeit und insbesondere der Dichtigkeit. Die Dekorschicht ist nicht mit einer versiegelnden Schicht versehen.

Die Patentschrift DE 10355160 bezieht sich auf eine transparente, nicht eingefärbte Glas/Glaskeramikplatte, die betrieblich hohen thermischen Belastungen ausgesetzt ist und die ganzflächig oder partiell eine blickdichte farbige, hochtemperaturstabile Beschichtung in Form einer mit farbgebenden Pigmenten versehenen organischen/anorganischen Netzwerkstruktur aufweist. Dabei wird die anorganische Netzwerkstruktur vorzugsweise durch eine Sol-Gel-Schicht gebildet, in die Farbpigmente und Füllstoffpartikel in einem vorgegebenen Mengenverhältnis eingebracht werden. Das Mischverhältnis Pigment/Sol ist üblicherweise 1:1 bezogen auf das Gewicht; bei gut deckenden Pigmenten kann der Anteil auf 20 Gew.-% reduziert werden.

In den Ausführungsbeispielen werden als mögliche Pigmente spinellbasierte Pigmente, oxidische Pigmente und zirkonbasierte Pigmente, aber auch Glitzerpigmente genannt.

Die erhaltene Mischung wird als farbige Beschichtung auf die Glas/Glaskeramikplatte aufgetragen und bei thermischen Bedingungen, die zu keiner Anschmelz-Reaktion zwischen der farbigen Schicht und der beschichteten Oberfläche führen, d.h. bei vergleichsweise niedrigen Temperaturen, eingebrannt. Auf die Oberfläche der erzeugten Dekorschicht wird vorzugsweise noch eine fett- und wasserundurchlässige, äußere Versiegelungsschicht aufgetragen.

Die nach dem erfindungsgemäßen Verfahren hergestellten Schichten sollen auch bei Temperaturen, die beim Dauerbetrieb einer Kochfläche auftreten (z.B. 700°C für 10 h) noch eine ausreichende Haftfestigkeit der Schicht auf dem Substrat aufweisen. Überraschender Weise hat sich gezeigt, dass insbesondere die Dichtigkeit des Zweischichtaufbaus aus Dekorschicht und Versiegelungsschicht maßgeblich von der genauen Zusammensetzung der Versiegelungsschicht abhängig ist.

Die DE 10355160 berücksichtigt den Zusammenhang zwischen der genauen Zusammensetzung der Versiegelungsschicht und der "Dichtigkeit" des Schichtpakets, umfassend die Dekorschicht und die Versiegelungsschicht, nicht. Es wird nur grundsätzlich erklärt, dass eine fett- und wasserundurchlässige Versiegelungsschicht aufgebracht werden kann.

Wie der aufgeführte Stand der Technik zeigt, ist bei der Herstellung von pigmentierten Schichten auf Sol-Gel-Basis grundsätzlich die Verwirklichung eines großen Farbortspektrums möglich, welches nur durch die zur Verfügung stehenden hochtemperaturstabilen Pigmente begrenzt zu sein scheint. Bei der praktischen Umsetzung hat sich jedoch in vielen Versuchen gezeigt, dass die Schichteigenschaften in dramatischer Weise von der verwendeten Pigmentierung abhängen. Dabei hat sich überraschender Weise ergeben, dass eine qualitativ hochwertige Beschichtung insbesondere von Glaskeramik-Artikeln nicht trivial ist. Wird von einer "optimalen" Pigmentzusammensetzung sowohl der Dekor- als auch der Versiegelungsschicht abgewichen, kommt es zu einer überproportionalen Verschlechterung der Schichteigenschaften besonders in Bezug auf die Haftfestigkeit und die Dichtigkeit.

Der Erfindung liegt daher die Aufgabe zugrunde eine Versiegelungsschicht für Dekorschichten auf Glas- oder Glaskeramik-Substraten bereitzustellen, die gute Eigenschaften in Bezug auf die Haftfestigkeit, einerseits zwischen Dekorschicht und Substrat und andererseits zwischen Dekor- und Versiegelungsschicht, sowie eine gute Dichtigkeit gegenüber dem Durchtritt von Fluiden und Gasen aufweist.

Diese Aufgabe wird bereits in einfacher Weise durch den Gegenstand der unabhängigen Ansprüche gelöst. Vorteilhafte Ausgestaltungen und Weiterbildungen sind in den Unteransprüchen ausgeführt.

Die erfindungsgemäßen Versiegelungsschichten für Dekorschichten auf Glas- oder Glaskeramik-Substraten werden mittels eines Sol-Gel-Verfahrens erzeugt, wobei zumindest Füllstoffe und anorganische Pigmente mit dem Sol-Gel vermischt werden. Das Sol-Gel-Bindemittel mit den Füllstoffen und den Pigmenten für die Dekorschicht wird auf mindestens eine Seite des Glas- oder Glaskeramik-Substrats aufgebracht, getrocknet und anschließend eingebrannt. Das Sol-Gel-Bindemittel für die Versiegelungsschicht wird in einem zweiten Schritt mit den Füllstoffen und den anorganischen Pigmenten vermischt und auf das Substrat mit der ausgehärteten Dekorschicht aufgetragen und anschließend bei erhöhten Temperaturen ausgehärtet. Die hergestellte Versiegelungsschicht kann dabei transluzent, teiltransparent oder opak, beziehungsweise deckend sein.

Die für die Versiegelungsschicht verwendeten anorganischen Dekorpigmente umfassen plättchenförmige Pigmentpartikel und anorganischen, vorzugsweise nicht-oxidischen Festschmierstoff, die in einem Verhältnis der Gewichtsprozente (Gew% plättchenförmige Pigmente : Gew% Festschmierstoff-Partikel) im Bereich von 10:1 bis 1:1, vorzugsweise 5:1 bis 1:1 und besonders bevorzugt 3:1 bis 1,5:1 zugegeben werden. Die Verwendung eines Festschmierstoffs, insbesondere im vorstehend angegebenen Gewichtsprozent-Verhältnis hat sich als sehr vorteilhaft hinsichtlich der Dichtigkeit der Versiegelungsschicht gegenüber öligen und wässrigen Fluiden herausgestellt. Überraschender Weise haben andere Zusammensetzungsverhältnisse deutlich schlechtere Eigenschaften, nicht nur in Bezug auf die Dichtigkeit der Versiegelungsschicht, sondern insbesondere auch in Bezug auf die Haftfestigkeit, die einen wesentlichen Faktor bei Beschichtungen der beschriebenen Art darstellt.

Ein nach dem vorbeschriebenen Verfahren hergestellter Glas- oder Glaskeramik-Artikel umfasst demgemäß ein Glas- oder Glaskeramik-Substrat, das mindestens auf einer Seite mit einer dekorativen Beschichtung versehen ist, wobei eine Dekorschicht durch eine Versiegelungsschicht teil- oder vollflächig überdeckt wird. Sowohl die Dekor- als auch die Versiegelungsschicht weisen ein ausgehärtetes Sol-Gel-Bindemittel auf, das im Wesentlichen aus einem Metalloxid-Netzwerk besteht. Dieses Metalloxid-Netzwerk ist bevorzugt ein SiO₂-Netzwerk, besonders bevorzugt ein glasiges Metalloxid-Netzwerk. Vorteilhafter Weise enthält die dekorative Beschichtung, insbesondere im Fall der bei niedrigeren Temperaturen ausgehärteten Versiegelungsschicht, organische Reste, die an das Metalloxid-Netzwerk gebunden sind. Diese organischen Reste führen zu wesentlich verbesserten wasser- und fettabweisenden Eigenschaften der erzeugten Schichten. Die Versiegelungsschicht enthält gemäß einer bevorzugten Weiterbildung der Erfindung mindestens 5% mehr organische Reste, bezogen auf die Anzahl der organischen Reste, als die Dekorschicht.

In Versuchen hat sich gezeigt, dass die Art der Pigmentierung sowohl der Dekorschicht als auch der Versiegelungsschicht ausschlaggebenden Einfluss insbesondere auf die Haftfestigkeit und die Dichtigkeit der hergestellten dekorativen Beschichtung hat. Erfindungsgemäß wird unter einer Schicht mit "guter Haftfestigkeit" verstanden, dass bei einem Klebebandtest in Anlehnung an DIN 58196-6 keine Ablösung der Schicht erfolgt. Es werden dabei unterschiedlich vorkonditionierte Testproben eingesetzt (z.B. nach Einbrennen, nach Wasserdampfbelastung, Abschrecken, o.ä.). Alternativ wird ein Crockmetertest in Anlehnung an DIN 58196-5 durchgeführt, wobei es wiederum zu keiner Ablösung der Schicht kommen darf. Eine leichte Polierwirkung durch lokale Glättung der Schicht ist jedoch zulässig. Eine "gute Dichtigkeit" wird, entsprechend der einwirkenden Stoffe, anhand der folgenden Tests definiert und bezieht sich auf ein-Schichtpaket, das eine Dekorschicht und eine Versiegelungsschicht umfasst.

Die Dichtigkeit der Beschichtung gegenüber wäßrigen und öligen Medien sowie Reinigungsmitteln wird mittels eines Tropfen-Tests definiert. Ein Tropfen der zu testenden Flüssigkeit wird auf die Unterseitenbeschichtung aufgebracht und Mediums-spezifisch unterschiedlich lange einwirken gelassen. Wassertropfen werden nach 30 Sekunden, Öltropfen nach 24 Stunden und Reinigungsmitteltropfen nach einigen Minuten abgewischt. Anschließend wird der Glas-/ Glaskeramik-Artikel von oben durch das Substrat begutachtet. Der Tropfen bzw. der Schatten des Tropfens darf nicht sichtbar sein. Eine Durchdringung der Schicht mit dem aufgebrachten Medium ist unzulässig. Der Wassertropfen-Test wird darüber hinaus an Proben mit unterschiedlicher Vorkonditionierung durchgeführt: im Anlieferungszustand, nach Temperung, nach Abschrecken, nach Wasserdampfbelastung, etc.

Bei einem weiteren Test bezüglich der Dichtigkeit gegenüber öligen Medien wird eine Schnittkante der Beschichtung in Öl gestellt, wobei die Einwirkzeit zwischen einer und fünf Minuten variiert. Öl darf nicht in der Schicht nach oben kriechen.

Die Dichtigkeit gegenüber Kleber wird bestimmt, indem eine Klebewulst auf die Beschichtung aufgebracht und dort ausgehärtet wird. Gegebenenfalls werden verschiedene Temperungen der so präparierten Proben durchgeführt. Anschließend wird der Glas-/Glaskeramik-Artikel von oben durch das Substrat hindurch begutachtet. Die Klebewulst bzw. ihr Schatten darf nicht sichtbar sein.
Die Dichtigkeit gegenüber Dichtmaterialien wird analog ausgeführt, jedoch ohne den Schritt der Aushärtung. Die Dichtmaterialien bzw. ein Schatten, der aus der Ausgasung der Dichtmaterialien resultiert, darf nicht sichtbar sein.

Es hat sich überraschender Weise gezeigt, dass die Kombination von plättchenförmigen Pigmenten und anorganischem Festschmierstoff in bestimmten Gewichtsverhältnissen zu außerordentlich guten Haftfestigkeiten der Dekorschicht führt. Eine gute Dichtigkeit der Versiegelungsschicht, verbunden mit einer guten Haftfestigkeit zwischen Dekor- und Versiegelungsschicht, kann zum einen erreicht werden indem für die Versiegelungsschicht die gleiche Pigmentierung wie für die Dekorschicht verwendet wird.

Darüber hinaus haben jedoch überraschender Weise auch Zusammensetzungen, die für die Pigmentierung der Dekorschicht ungeeignet sind, hervorragende Ergebnisse in Hinblick auf die vorab beschriebenen Eigenschaften der Versiegelungsschicht geliefert.

Die dekorative Beschichtung, umfassend eine Dekor- und Versiegelungsschicht, kann sowohl auf der Unter- als auch auf der Oberseite des Glas- oder Glaskeramik-Substrats aufgebracht werden; wahlweise auch auf beiden Seiten des Substrats. Sowohl Dekor- als auch Versiegelungsschicht können vollflächig aufgetragen werden.

In vorteilhafter Weise können aber auch unterschiedliche Bereiche des Substrats mit unterschiedlichen Dekorschichten versehen werden, so dass z.B. die Funktionsflächen der Kochfelder einer Kochplatte von den nicht beheizten Bereichen optisch unterschieden werden können.

Optional ist es auch möglich, Felder ohne Dekorschicht vorzusehen, die beispielsweise für Anzeigen oder als Sensor-Felder verwendet werden können.

Die erfindungsgemäßen Versiegelungsschichten können sowohl opak, beziehungsweise blickdicht, als auch teiltransparent oder transluzent ausgebildet sein. So können Bereiche, die nicht mit einer Dekorschicht versehen werden sollen, trotzdem versiegelt werden, auch ohne opak zu sein.

Darüber hinaus kann die Versiegelungsschicht, etwa um Kosten zu sparen, auch nur in Teilbereichen aufgebracht werden, falls eine vollflächige Versiegelung nicht erforderlich ist.

Opake erfindungsgemäße Versiegelungsschichten eignen sich auch zur Verblendung, z.B. eines Unterbaus, der für den Endverbraucher nicht sichtbar sein soll.

In einer bevorzugten Ausführungsform werden plättchenförmige Pigmente verwendet, deren durchschnittliche Länge des größten Querschnitts in einem Verhältnis von 10:1 bis 1:3 bevorzugt 8:1 bis 1:1 besonders bevorzugt 6:1 bis 2:1 liegt. Diese vorteilhafte Ausgestaltung bedingt, dass sich die plättchenförmigen Pigmente sich im Wesentlichen parallel zur Oberfläche des Substrats ausrichten. Darüber hinaus haben die plättchenförmigen Pigmente die Eigenschaft, dass sie sich "miteinander verhaken". Die in etwa parallele Ausrichtung zur Susbstratoberfläche zusammen mit der Verhakung der Plättchen führt zu einem wesentlichen Zuwachs der Dichtwirkung der Versiegelungsschicht. Die Pigmentierung der Schicht kann aber auch noch weitere Pigmente enthalten. Vorzugsweise übersteigt ein Anteil weiterer Pigmente aber nicht 15% der Gesamtmasse der Pigmente.

Dabei ist es insbesondere vorteilhaft, wenn das Aspektverhältnis der plättchenförmigen Pigmente bei mindestens 5:1 liegt und deren größte Querschnittslänge im Mittel zwischen 2 und 120 µm, bevorzugt zwischen 10 und 60 µm liegt. Die oben genannte Größenordnung der anorganischen plättchenförmigen Pigmente ist dabei vorteilhafter Weise so gewählt, dass sie die Dichtwirkung der Versiegelungsschicht wesentlich unterstützt.

In einer bevorzugten Ausführungsform bestehen die plättchenförmigen Pigmente aus Glimmerplättchen und/oder Borosilikat-basierten Plättchen und/oder Glasflakes, insbesondere bevorzugt aus beschichteten Glimmerplättchen und/oder Metallplättchen und/oder Glasflakes. Die plättchenförmigen Pigmente können zur Realisierung unterschiedlicher Anmutungen unterschiedliche vergütet sein. Es hat sich jedoch gezeigt, dass mit Ausnahme einer TiO₂-Vergütung, mit der eine Anmutung von gebürstetem Stahl erzeugt werden kann, die anders vergüteten Plättchen, z.B. mit Fe₂O₃ vergütete Plättchen, nicht mehr als 10 Gew.-% der gesamten plättchenförmigen Pigmente ausmachen sollten. Ein höherer Anteil anders vergüteter Plättchen kann zu verschlechterten Schichteigenschaften führen, insbesondere hinsichtlich der Dicht- und Haftfestigkeit.

In Versuchen hat sich überraschend gezeigt, dass die genannten Gewichtsverhältnisse zwischen plättchenförmigem Pigment, anorganischen Festschmierstoff und optional anderen Effektpigmenten eingehalten werden sollten, da es sonst zur Verschlechterung von zunächst der Dichtigkeit des hergestellten Schichtpakets, insbesondere gegenüber öligen Fluiden, und anschließend zu unzureichenden Haftfestigkeiten zwischen Dekorschicht und Substrat kommt. Größere Mengen anderer Effektpigmente beeinträchtigen überproportional stark insbesondere die Dichtigkeit und Haftfestigkeit sowohl der Dekor- als auch der Versiegelungsschicht. Die Verwendung von anderen Absorptionspigmenten als den genannten, die anstelle eines der Hauptpigmente oder als andere Effektigmente in die farbgebende Schicht eingebracht werden, führt ebenfalls zu einer starken Abnahme der Schichtperformance in Bezug auf die genannten Eigenschaften.

Unter anorganischen Festschmierstoffen, vorzugsweise nicht-oxidischen Festschmierstoffen werden im Sinne der Erfindung Pigmente verstanden, die eine sehr geringe Oberflächenenergie aufweisen, die der des Graphits ähnlich ist oder geringer als diese ist. Vorzugsweise kommen Nicht-Oxide zum Einsatz, deren Oberflächenenergie höchstens 20% oberhalb der Oberflächenenergie von Graphit liegt.

Insbesondere hat sich eine Schichtgitterstruktur, beispielsweise eine Graphit-ähnliche Struktur als vorteilhaft herausgestellt, d.h. ein schichtartiger Aufbau der Pigmente, wobei einzelne Schichten untereinander nur mit geringen Bindungskräften verbunden sind, was zur Folge hat, dass solche Pigmente ein gutes Schmierverhalten zeigen.

Neben Graphit zeigen u.a. Bornitrid und viele Sulfide, insbesondere auch Molybdändisulfid diese Eigenschaften und können alternativ eingesetzt werden.

In einer bevorzugten Ausführungsform wird Graphit als anorganischer Festschmierstoff eingesetzt. Der Graphit weist bevorzugt zu 90 % eine Korngröße auf, die kleiner als ein Wert im Bereich 2 bis 50 Mikrometer, vorzugsweise kleiner als ein Wert im Bereich 6 bis 19 µm beträgt (= D90). Als Korngrösse wird hier im Sinne der Erfindung der grösste Durchmesser der Partikel verstanden.

Mit Graphit als anorganischem Festschmierstoff lassen sich durch die Variation des Graphit-Gehalts unterschiedliche Grautöne erzeugen. Der relevante Farbton-Bereich, der mit Graphit als anorganisches Nicht-Oxid nach dem erfindungsgemäßen Verfahrens herstellbar ist, ist im CIELAB-Farbsystem durch die folgenden Werte gegeben:
L: von 85 bis 30
a: von -8 bis +8
b: von -8 bis +8

In einer besonders bevorzugten Ausführungsform hat die Versiegelungsschicht die gleiche Zusammensetzung wie die Dekorschicht. Vorteilhafter Weise kann für diese Ausführungsform ein einziges Sol-Gel-Bindemittel mit Füllstoffen und Pigmenten hergestellt werden, das dann sowohl für die Herstellung der Dekorschicht als auch für die Herstellung der Versiegelungsschicht verwendet werden kann.

Um andere Farbtöne herzustellen, kann Graphit durch einen anderen Festschmierstoff zumindest teilweise ersetzt werden. Gedacht ist unter anderem an Bornitrid oder Sulfide mit Schichtgitterstruktur, wie MoS₂. Wird Bornitrid zusätzlich oder anstelle von Graphit als Festschmierstoff verwendet, ist es besonders vorteilhaft, wenn die Partikelgrößen zwischen 1 und 100 µm, vorzugsweise zwischen 3 und 20 µm liegen, da ebenso wie beim Graphit die Partikelgröße des zugegebenen Bornitrids großen Einfluß auf die Haftfestigkeit und Dichtigkeit der Versiegelungsschicht in dem fertigen Glas- oder Glaskeramik-Artikel hat. Zu große Partikel habe dabei schlechte Haftfestigkeiten zur Folge.

Gute Eigenschaften hinsichtlich Dichtigkeit und Haftfestigkeit der Versiegelungsschicht können aber auch mit anderen Pigmentierungen erhalten werden. Der Graphit-Anteil der Pigmentierung kann z.B. deutlich reduziert werden oder sogar ganz weggelassen werden. Eine solche Pigmentierung bietet sich beispielsweise an, wenn die Leitfähigkeit der Beschichtung möglichst gering sein soll, z.B. um eine ausreichende Schaltsicherheit mit kapazitiven Berührungsschaltern zu erzielen. Unter anderem in diesem Fall kann auch ein anderer anorganischer, vorzugsweise nicht-oxidische Festschmierstoff, oder auch eine Mischung aus verschiedenen anorganischen nicht-oxidischen Festschmierstoffen, wie beispielsweise Bornitrid verwendet werden. Bornitrid hat den Vorteil, dass es nur eine sehr geringe elektrische Leitfähigkeit aufweist und damit als Pigment für Schichten, die in Verbindung mit kapazitiven Berührungsschaltern verwendet werden sollen, besonders geeignet ist.

Sowohl die Dekorschicht als auch die Versiegelungsschicht basieren auf einem ausgehärteten Sol-Gel-Bindemittel, das durch Hydrolyse und anschließende Kondensation aus wenigstens einer metallorganischen Verbindung, bevorzugt einem Silizium-Alkoholat, hergestellt wird. Die Verwendung metallorganischer Verbindungen hat den Vorteil, dass das Sol-Gel-Bindemittel zu einem Metalloxid-Netzwerk, bevorzugt zu einem SiO₂-Netzwerk, aushärtet, an das organische Bestandteile gebunden sind. Die organischen Reste oder Bestandteile verbessern dabei in vorteilhafter Weise beispielsweise die wasser- und fettabweisenden Eigenschaften der Versiegelungsschicht. Besonders gute Erfahrungen wurden bei der gleichzeitigen Verwendung von Tetraethoxysilan, Triethoxymethylsilan erzielt.

Abgesehen von den beschriebenen grundlegenden Stoffen werden dem Sol-Gel-Bindemittel Pigmente, Füllstoffe und/oder Lösungsmittel und/oder Additive zugesetzt.

Als Füllstoffe können kugelförmige Partikel zugegeben werden. Pyrogene Kieselsäure, die kleine kugelförmige Partikel bildet, und/oder kolloiddisperse SiO₂-Partike können dazu vorteilhafter Weise hinzugegeben werden. Kugelförmige Partikel als Füllstoffe haben den Effekt, dass die plättchenförmigen Pigmente überwiegend parallel zur Oberfläche des Substrats ausgerichtet werden und so eine Erscheinung von leicht angerauchtem oder gebürstetem Metall erzeugen. Darüber hinaus zeigt sich, dass derartige dekorative Beschichtungen deutlich widerstandfähiger, insbesondere in Hinblick auf ihre Abrieb- und Kratzfestigkeit sind.

Besonders gute Ergebnisse werden erzielt, wenn der Füllstoffanteil 40 Gew.-% der Masse des oder der plättchenförmigen Pigmente in der Beschichtungszusammensetzung nicht übersteigt. Vorzugsweise werden Füllstoffe bestehend aus kolloiddispersen SiO₂-Partikeln und/oder pyrogener Kieselsäure, verwendet, deren Anteil jeweils höchstens 20 Gew.-% der Masse des oder der plättchenförmigen Pigmente ausmacht. Eine Mischung aus beiden Arten von Füllstoffen, die unterschiedliche Größen haben können, hat sich als besonders vorteilhaft für die Eigenschaften der Dekorschicht und/oder des Substrats, wie etwa dessen Festigkeit, erwiesen.

In einer besonders bevorzugten Ausführungsform ist der Gewichtsanteil von Pigment und Füllstoffen in der Dekor- und/oder der Versiegelungsschicht höher als der Gewichtsanteil des verfestigten und ausgehärteten Sol-Gel-Bindemittels. Bevorzugt beträgt der Anteil von Sol-Gel-Bindemittel in der erzeugten Dekor- und/oder Versiegelungsschicht höchstens 40 Gew.-%, vorzugsweise höchstens 30 Gew.-%. Diese Mischungsverhältnisse wirken sich positiv auf die Porosität und das Gefüge der Dekor- und/oder der Versiegelungsschicht aus. Es hat sich gezeigt, dass die Schichten elastischer werden und so unterschiedliche Temperaturausdehnungskoeffizienten von Substrat und Dekorschicht bzw. Dekor- und Versiegelungsschicht ausgeglichen werden können. In der Folge werden das Abplatzen der Dekorschicht und/oder die Entstehung von festigkeitsmindernden Mikrorissen in Dekorschicht oder Substrat vermieden.

Ist das Sol mit den angegebenen Pigmenten und Füllstoffen versehen worden, wird das gelförmige Sol-Gel-Bindemittel unter zumindest teilweiser Verflüchtigung von zugesetztem und/oder bei-der Reaktion entstandenem Lösungsmittel erzeugt. Es kann insbesondere den bei der Hydrolyse entstehenden Alkohol und/oder zugesetzten Alkohol als Lösungsmittel enthalten. Die Verflüchtigung des/der Lösungsmittel sollte zumindest teilweise nach dem Aufbringen auf das Substrat erfolgen.

Generell wird ist es möglich, die Mischung, mindestens umfassend das Sol, Pigmente und Füllstoffe durch Bepinseln, Besprühen oder Tauchen auf das Substrat aufzubringen. In einer besonders bevorzugten Weiterbildung der Erfindung hat das Gemisch eine pastenförmige Konsistenz, so dass es als Siebdruckpaste verwendet werden kann. Dabei besteht die Möglichkeit, die Dekorschicht sowohl vollflächig als auch teilflächig bzw. lateral strukturiert aufzubringen. Das teilflächige bzw. lateral strukturierte Aufbringen hat den Vorteil, dass mehrere Dekorschichten mit unterschiedlicher Zusammensetzung und/oder Anmutung und/oder Farbe kombiniert werden können, um auf unterschiedlichen Bereichen des Substrats unterschiedliche optische Eindrücke hervorzurufen, beispielsweise um die mindestens eine Kochfläche von ihrer Umgebung optisch abzuheben. Eine weitere Ausführungsform der Erfindung beinhaltet Bereiche, wie etwa Fenster für Sensoren oder Displays, die nicht mit einer Dekorschicht versehen werden.

Nach dem Auftrag der Dekorschicht auf das Substrat wird vorteilhafter Weise die Kondensationsreaktion des Sol-Gels durch Trocknen bei bevorzugt 100 bis 250°C beschleunigt. Es bildet sich ein Gel mit einem Metalloxid-Netzwerk. Beim Einbrennen, bei Temperaturen > 350°C, spaltet sich Wasser und/oder Alkohol vom gelförmigen Sol-Gel-Bindemittel unter Bildung des festen Metalloxid-Gerüsts, insbesondere des SiO₂- oder organisch modifizierten SiO₂-Gerüsts, ab. In einer besonders bevorzugten Ausführungsform werden die beiden Verfahrensschritte "Trocknen" und "Einbrennen" in einem Prozess kombiniert, z.B. unter Verwendung eines Rollenofens.

Erfindungsgemäß wird die so erzeugte Dekorschicht mit einer versiegelnden Schicht abgedeckt, um die Schichteigenschaften, insbesondere hinsichtlich der Dichtigkeit gegen flüssige und gasförmige Stoffe, zu optimieren. Bevorzugt wird die aufgetragene Versiegelungsschicht bei Temperaturen von <300°C getrocknet, um einerseits eine Aushärtung der Sol-Gel-Matrix zu erreichen, aber andererseits die an die Sol-Gel-Matrix gebundenen organischen Reste nicht vollständig auszubrennen. Diese organischen Reste sorgen für die gute Versiegelungswirkung dieser Schicht, da sie wasser- und fettabweisend wirken.

Eine derartige Barriere- oder Versiegelungsschicht ist besonders vorteilhaft, wenn der hergestellte Glas- oder Glaskeramik-Artikel verbrennungsbeheizt wird. Beispielsweise ist dies der Fall bei gasbeheizten Glaskeramik-Kochfeldern. Hier ergibt sich das Problem, dass bei der Verbrennung auch Schwefeloxide gebildet werden können. Diese setzen sich zusammen mit Wasser, welches ebenfalls bei der Verbrennung entsteht, zu Säure um, die wiederum die Glaskeramik angreifen kann. Die erfindungsgemäße Versiegelungsschicht schützt sowohl das Substrat als auch die Dekorschicht vorteilhafter Weise gegen diesen Säureangriff.

Mit der Dekorschicht in Verbindung mit der Versiegelung kann aber erfindungsgemäß nicht nur eine optisch ansprechende Erscheinung, sondern darüber hinaus auch ein Artikel mit erhöhter Haltbarkeit geschaffen werden.

Die versiegelnde Schicht kann vorteilhafter Weise sowohl bezüglich der Sol-Gel-Matrix als auch der anorganischen Pigmente die gleiche Zusammensetzung wie die Dekorschicht aufweisen. Durch eine solche Ausgestaltung lassen sich die Prozesse vereinfachen, da die Schritte zur Herstellung des Sol-Gels für die Versiegelungsschicht eingespart werden können. Es kann das gleiche Sol-Gel wie für die Dekorschicht verwendet werden kann. Dies hat vorteilhafter Weise eine Zeit- und Kostenersparnis zur Folge.

Eine weitere bevorzugte Ausführungsform sieht vor, dass Dekor- und Versiegelungsschicht unterschiedliche Zusammensetzungen aufweisen, insbesondere kann es günstig sein, den Graphitgehalt bzw. Schmierstoffgehalt der Versiegelungsschicht höher zu wählen als den Graphitgehalt bzw. Schmierstoffgehalt der Dekorschicht.

Die geringere oder fehlende Leitfähigkeit von Versiegelungsschichten mit weniger oder ohne Graphit ermöglicht den Einsatz eines solchen Glas- oder Glaskeramik-Artikels im Bereich der kapazitiven Touches oder Berührungsschaltern, beispielsweise als Oberfläche einer Touchscreen.

Ein erfindungsgemäßer Glaskeramik-Artikel kann beispielsweise ein Glaskeramik-Kochfeld sein. Um eine glatte, robuste Oberfläche zu erhalten und die dekorative Beschichtung vor Abnutzung zu schützen, wird bei einem Glaskeramik-Kochfeld die dekorative Beschichtung vorzugsweise auf der Unterseite angeordnet. Es hat sich überraschend gezeigt, dass die dekorative Beschichtung sogar eine Heizzone des Kochfelds bedecken kann, da sie hinreichend wärmeleitfähig und temperaturbeständig ist.

Die erfindungsgemäß herstellbaren, bei gegenüber der Dekorschicht geringeren Temperaturen ausgehärteten Sol-Gel-basierten pigmentierten Versiegelungsschichten zeichnen sich gegenüber gleichartig pigmentierten Sol-Gel-basierten Dekorschichten durch eine niedrigere Porosität aus. Sowohl Dekor- als auch Versiegelungsschicht sind im allgemeinen mikroporös mit mittleren Porendurchmessern ermittelt nach der BJH-Methode anhand der Absorption kleiner 2 Nanometern, insbesondere kleiner 1,5 Nanometer.

Wird die innere Oberfläche nach Multi-point-BET-Auswertung mit Stickstoff-Sorption bestimmt, können für die Versiegelungsschicht allgemein Werte von kleiner 50 m²/Gramm gemessen werden. Typische Werte sehr guter Versiegelungsschichten liegen bei 10-40 m²/Gramm. Demgegenüber zeigen gleichartige Dekorschichten typischerweise Werte von 200-300 m²/Gramm.

Das kumulative adsorptive Porenvolumen gemessen mit der BJH-Methode liegt für die erfindungsgemäßen Versiegelungsschichten typischerweise bei unter 0,08 Kubikzentimeter pro Gramm. So wurde beispielsweise an einer Versiegelungsschicht mit sehr guten Versiegelungseigenschaften ein Wert von 0,048 Kubikzentimeter pro Gramm gemessen. Demgegenüber liegt das kumulative adsorptive Porenvolumen einer gleichartigen Dekorschicht typischerweise bei über 0,1 Kubikzentimeter pro Gramm. So wurde an einer gut haftenden Dekorschicht mit einer Pigmentierung, wie sie auch die erfindungsgemäßen Versiegelungsschichten aufweisen, ein kumulatives Porenvolumen von 0,18 Kubikzentimeter pro Gramm gemessen.

Im folgenden wird die Erfindung anhand von Ausführungsbeispielen und unter Bezugnahme auf die Zeichnungen näher erläutert. Gleiche und ähnliche Elemente sind mit den gleichen Bezugszeichen versehen; die Merkmale verschiedener Ausführungsbeispiele können miteinander kombiniert werden.

Es zeigen:
- Fig. 1: einen schematischen Querschnitt durch ein Glas- oder Glaskeramik-Substrat mit einer Dekorschicht und einer erfindungsgemäßen Versiegelungsschicht, wobei Dekor- und Versiegelungsschicht die gleiche Zusammensetzung aufweisen,
- Fig. 2: einen schematischen Querschnitt durch eine Variante des in Fig. 1 gezeigten Beispiels, und
- Fig. 3: eine Aufsicht auf ein Glaskeramik-Kochfeld, das mit einer erfindungsgemäßen Versiegelungsschicht und einer Dekorschicht versehen ist.

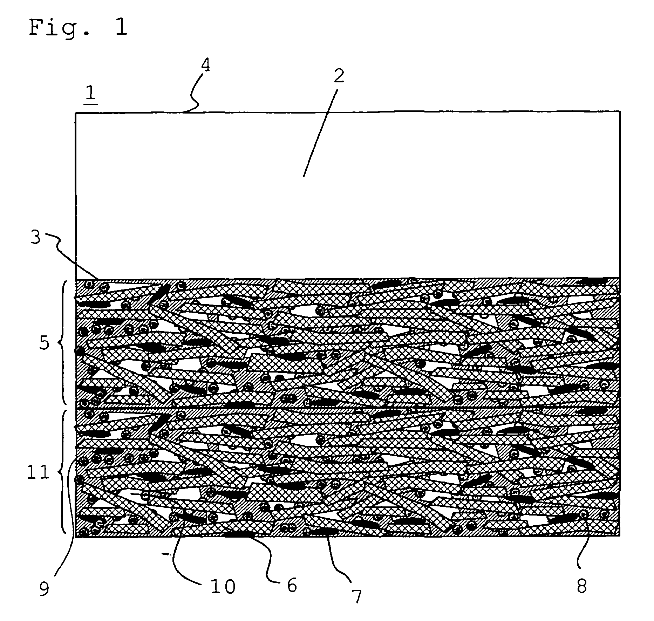

In Fig. 1 ist ein schematischer Querschnitt durch einen erfindungsgemäßen Glas- oder Glaskeramik-Artikel 1 mit einer Dekor- und einer Versiegelungsschicht dargestellt. Der Glas- oder Glaskeramik-Artikel 1 umfasst in diesem Beispiel ein Glas- oder Glaskeramik-Substrat 2 mit einer Unterseite 3 und einer Oberseite 4. Der Artikel 1 kann insbesondere-ein Glaskeramik-Kochfeld sein. Auf einer der Seiten 3 oder 4 ist eine Dekorschicht 5, die eine erfindungsgemäße Pigmentzusammensetzung aufweist, aufgebracht. Handelt es sich bei dem Artikel 1 um ein Glaskeramik-Kochfeld, so wird die Dekorschicht 5 besonders bevorzugt auf der Unterseite 4 des Kochfelds aufgebracht, um eine Abnutzung der Schicht durch den Gebrauch zu verhindern. Die erfindungsgemäße Versiegelungsschicht 11 weist die gleiche Zusammensetzung wie die Dekorschicht 5 auf.

Zur Herstellung der Dekorschicht 5 werden Dekorpigmente 6, 7 und Füllstoffe 8 mit einem Sol vermischt und das resultierende gelförmige Sol-Gel-Bindemittel auf dem Glas-oder Glaskeramik-Substrat 2 durch Einbrennen ausgehärtet. Dabei bildet sich eine Dekorschicht 5 mit einem mikroporösen Komposit-Gefüge grosser innerer Oberfläche.

Die verwendeten Dekorpigmente umfassen erfindungsgemäß plättchenförmige Pigmente 6 und Graphit 7, die in einem Gewichtsverhältnis im Bereich von 10:1 (10 Teile plättchenförmige Pigmentpartikel zu 1 Teil Festschmierstoff) bis 1:1 enthalten sind. Als plättchenförmige Pigmente werden bevorzugt Glimmerplättchen und/oder Borosilikat-basierte Plättchen, besonders bevorzugt beschichtete Glimmerplättchen und/oder Borosilikat-basierte Plättchen und/oder Glasflakes und insbesondere bevorzugt TiO₂-vergütete beschichtete Glimmerplättchen und/oder beschichtete Borosilikat-basierte Plättchen und/oder beschichtete Glasflakes verwendet. Die plättchenförmigen Pigmente haben bevorzugt einen Querschnitt, der zwischen 5 und 125 µm liegt, während der D90-Wert des Graphits bevorzugt im Bereich von 6 bis 19 µm liegt.

In einer besonderen Ausführungsform können als plättchenförmige Pigmente auch synthetische Glimmerpigmente eingesetzt werden. In einer weiteren bevorzugten Ausführungsform können die plättchenförmigen Glimmerpigmente mit Kobaltoxid und Eisenoxid beschichtet sein.

Neben den Dekorpigmenten 6, 7 sind in der Schicht 5 auch noch Füllstoff-Partikel 8 enthalten. Die Füllstoff-Partikel 8 und die Dekorpigment-Partikel 6, 7 werden durch ein ausgehärtetes Sol-Gel-Bindemittel 9 zu einer festen Schicht verbunden, wobei der Gewichtsanteil von Pigment-Partikeln 6, 7 und Füllstoff-Partikeln 8 höher als der Gewichtsanteil des verfestigten und ausgehärteten Sol-Gel-Bindemittels 9 ist. Bevorzugt beträgt bei einer wie in Fig. 1 gezeigten Dekorschicht 5 dabei der Anteil von Sol-Gel-Bindemittel 9 höchstens 40 Gew.-%, oder sogar nur höchstens 30 Gew.-% der Gesamtmasse der Schicht 5. Durch den hohen Feststoff-Anteil bzw. durch den geringen Anteil von Sol-Gel-Bindemittel 9 bleiben Poren 10 bestehen. Die insgesamt poröse Schicht ist vergleichsweise flexibel, so dass Unterschiede der Temperaturausdehnungskoeffizienten von Substrat 2 und Dekorschicht 5 ausgeglichen werden können.

Ein gelförmiges Sol-Gel-Bindemittel, dem die weiter unten beschriebenen unterschiedlichen Pigmentmischungen zugesetzt sind, kann wie folgt dargestellt werden:
Es wird ein Mischung aus Tetraethoxyorthosilan (TEOS) und Triethoxymethylsilan (TEMS) hergestellt, wobei Alkohol als Lösungsmittel zugegeben werden kann. Eine wäßrige Metalloxid-Dispersion, insbesondere eine SiO₂-Dispersio in Form kolloiddisperser SiO₂-Partikel, wird mit Säure, vorzugsweise Salzsäure oder einer anderen Mineralsäure, wie Schwefelsäure gemischt. Die beiden getrennt hergestellten Mischungen können für eine verbesserte Homogenisierung gerührt werden. Anschließend werden die beiden Mischungen zusammengegeben und vermischt.

Vorteilhafterweise läßt man diese Mischung, vorzugsweise unter ständigem Rühren, für beispielsweise eine Stunde reifen. Parallel zum Ansatz dieser Mischung können die Pigmente und optional weitere Füllstoffe, bevorzugt pyrogene Kieselsäure, abgewogen, der reifenden Mischung zugegeben und dispergiert werden. Die pyrogene Kieselsäure und/oder die kolloiddale SiO₂-Dispersion liefern die kugelförmigen Füllstoffpartikel 8 für die fertige Dekorschicht 5. Der Anteil von Füllstoffen beträgt dabei jeweils kleiner 20 Gew.-% der Masse des oder der plättchenförmigen Pigmente 6, 7. Insgesamt beträgt der Gewichtsanteil von Füllstoff-Partikeln 8 dabei bevorzugt höchsten 10 Gew.-% des Gewichtsanteils der Pigmentpartikel 6, 7.

In Abhängigkeit von der vorgesehenen Art des Auftragens auf das Substrat können unterschiedliche Lösungsmittel, Rheologieadditive und andere Zusatzstoffe der Mischung zugegeben werden.

Das Sol wandelt sich durch Verflüchtigung des Alkohols und durch Polykondensation des hydrolysierten TEOS und TEMS in ein Metalloxid-Gel um. Dieser Prozess wird nach dem Auftrag der Mischung auf das Substrat 2 durch Trocknen bei Temperaturen zwischen 100 und 250°C beschleunigt, so dass sich die aufgetragene Schicht unter Ausbildung des Gels verfestigt. Werden beispielsweise TEOS und/oder TEMS als Edukte verwendet, entsteht ein SiO₂-Netzwerk, insbesondere auch ein zumindest teilweise methylsubstituiertes SiO₂-Netzwerk. Das sich anschließende Einbrennen der getrockneten Schicht bei Temperaturen von vorzugsweise >350°C schließt die Reaktion zum SiO₂-Netzwerk ab und führt zu einer Verdichtung der so erzeugten Dekorschicht 5.

Bei dem in Fig. 1 dargestellten Ausführungsbeispiel sind die plättchenförmigen Pigmentpartikel 6 überwiegend parallel zur Oberfläche des Substrats ausgerichtet. Unter einer überwiegend parallelen Ausrichtung wird erfindungsgemäß verstanden, dass die Winkelverteilung der Flächennormalen der Pigmentpartikel 6 nicht stochastisch ist, sondern vielmehr ein deutliches Maximum in Richtung der Flächennormalen der Substratoberfläche aufweist. Diese Einregelung der Pigmentpartikel wird besonders einfach durch den Einsatz von Füllstoffen 8 mit kugelförmiger Geometrie erreicht. Die Einregelung der plättchenförmigen Pigmentpartikel 6 hat den Vorteil, dass der Metallik-Effekt verstärkt wird und die erzeugte Dekorschicht 5 außerdem eine verbesserte Kratz- und Abriebbeständigkeit aufweist.

Bei dem in Fig. 1 dargestellten Ausführungsbeispiel ist die Dekorschicht 5 außerdem mit einer erfindungsgemäßen Versiegelungsschicht 11 abgedeckt. Die Versiegelungsschicht 11 hat im einfachsten Fall die gleiche Zusammensetzung wie die Dekorschicht 5 und kann damit auch mit einem gleichartigen Verfahren hergestellt werden. Dadurch ergeben sich Kosten- und Zeitersparnisse.

Im Folgenden werden Pigment-Zusammensetzungen beschrieben, die besonders gute Schichteigenschaften bezüglich der erzeugten Dekorschicht ermöglichen. In einem bevorzugten Ausführungsbeispiel ist diese Zusammensetzung gleichzeitig die Zusammensetzung der erfindungsgemäßen Versiegelungsschicht:
Die Pigmentierung "Schwarz" enthält 67 Gewichtsprozent Calcium Aluminium Borsilikat beschichtet mit: Siliciumoxid, Titanoxid, Zinnoxid (plättchenförmiges Pigment) und 33 Gewichtsprozent hochkristallinen Graphit mit einem D90-Wert von 5 - 8 Mikrometern (Graphit). Mit dieser Mischung werden exzellente Schichteigenschaften hinsichtlich von Haft- und Kratzfestigkeit sowie der Dichtigkeit der Beschichtung erzielt. Die Dekorschicht ist dunkel grau gefärbt und zeigt einen Metallic-Effekt. In Verbindung mit einer geeigneten Versiegelungsschicht werden alle Kriterien zur Verwendung dieser Pigmentmischung in dekorativen Unterseitenbeschichtung einer Kochfläche erfüllt.

In Verbindung mit einer geeigneten Versiegelungsschicht erfüllt eine Dekorschicht mit dieser Pigmentierung die Ansprüche hinsichtlich Haftfestigkeit, Dichtigkeit und Kratzfestigkeit, die beispielsweise an ein Glaskeramik-Kochfeld gestellt werden.

Gemäß einer ersten Rezeptur für die Pigmentierung einer erfindungsgemäßen Versiegelungsschicht werden 70 Gewichtsprozent eines plättchenförmigen, TiO₂- und SnO₂-vergüteten glimmerbasierten Effektpigments mit einer Teilchengrösse im Bereich von 10 bis 60 Mikrometer und 6 Gewichtsprozent eines weiteren plättchenförmigen glimmerbasierten, mit TiO₂, Fe₂O₃ und SnO₂-vergüteten Effektpigments mit einer Teilchengrösse im Bereich von 5 bis 25 Mikrometer mit 24 Gewichtsprozent hochkristallinem Graphit mit einem D90-Wert von 15 bis 20 Mikrometern kombiniert. Diese Pigmentierung kann auch zur Herstellung einer Dekorschicht verwendet werden. Insbesondere kann die Beschichtung mit der gleichen Rezeptur für Dekor- und Versiegelungsschicht aufgebaut werden.

Gemäß einer zweiten Rezeptur für die Pigmentierung einer erfindungsgemäßen Versiegelungsschicht werden 63 Gewichtsprozent eines plättchenförmigen, TiO₂- und SnO₂-vergüteten glimmerbasierten Effektpigments mit einer Teilchengrösse im Bereich von 10 bis 60 Mikrometer und 5 Gewichtsprozent eines weiteren, plättchenförmigen glimmerbasierten, mit TiO₂, Fe₂O₃, SiO₂ und SnO₂-vergütete Effektpigments mit einer Teilchengrösse im Bereich von 5 bis 25 Mikrometer mit 32 Gewichtsprozent hochkristallinem Graphit mit einem D90-Wert von 5 bis 8 Mikrometern kombiniert. Diese Pigmentierung kann auch zur Herstellung einer Dekorschicht verwendet werden. Insbesondere kann die Beschichtung mit der gleichen Rezeptur für Dekor- und Versiegelungsschicht aufgebaut werden.

Gemäß einer dritten Rezeptur für die Pigmentierung einer erfindungsgemäßen Versiegelungsschicht werden 63 Gewichtsprozent eines plättchenförmigen, Kobaltoxid- und Eisenoxid-vergüteten synthetischen glimmerbasierten Effektpigments mit einer Teilchengrösse im Bereich von 5 bis 60 Mikrometer und 3 Gewichtsprozent eines weiteren, plättchenförmigen glimmerbasierten, mit TiO_{2,} Fe₂O₃, SiO₂ und SnO₂-vergüteten Effektpigments mit einer Teilchengrösse im Bereich von 10 bis 120 Mikrometer mit 32 Gewichtsprozent hochkristallinem Graphit mit einem D90-Wert von 5 bis 8 Mikrometern kombiniert. Diese Pigmentierung kann auch zur Herstellung einer Dekorschicht verwendet werden. Insbesondere kann die Beschichtung mit der gleichen Rezeptur für Dekor- und Versiegelungsschicht aufgebaut werden.

Die drei vorstehenden Ausführungsbeispiele können auch selbstverständlich miteinander kombiniert werden, wobei eine der Rezepturen zur Herstellung der Dekorschicht und die andere Rezeptur zur Herstellung der Versiegelungsschicht eingesetzt werden.

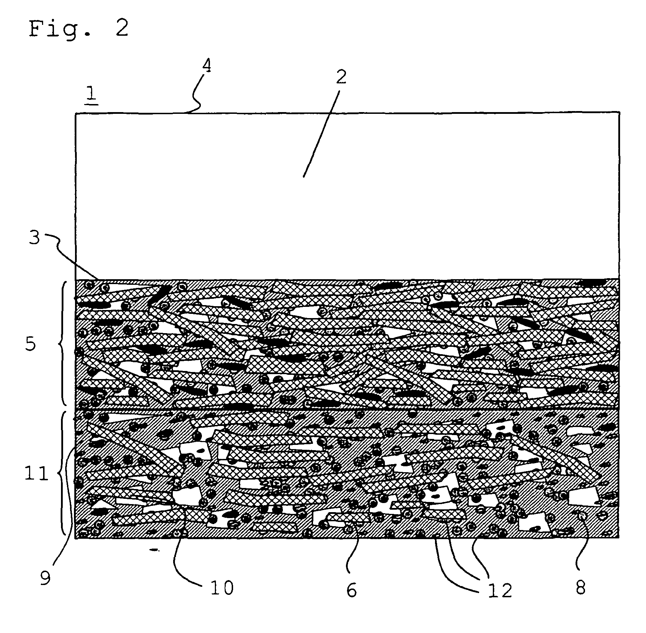

Fig. 2 zeigt einen schematischen Querschnitt durch einen erfindungsgemäßen Glas- oder Glaskeramik-Artikel 1, umfassend ein Glas- oder Glaskeramik-Substrat 2 mit einer Dekorschicht 5 und einer erfindungsgemäßen Versiegelungsschicht 11. Dekor- und Versiegelungsschicht 5, 11 sind analog zu dem für Fig. 1 geschilderten Verfahren hergestellt.

Ebenso wie bei dem in Fig. 1 gezeigten Ausführungsbeispiel kann die Versiegelungsschicht 11 zusätzlich allgemein auch TiO₂-Pigmente unterschiedlicher Korngröße enthalten, wobei die Korngrößen vorteilhafter Weise in einem Bereich zwischen 50 und 350 nm liegen. Diese zusätzlichen Pigmente müssen nicht plättchenförmig sein.

Als Festschmierstoff werden im Unterschied zu dem in Fig. 1 gezeigten Beispiel Bornitrid-Partikel 12 verwendet. Eine Versiegelungsschicht 11, die eine solche Pigmentzusammensetzung besitzt ermöglicht Anwendungen in Bereichen, in denen eine elektrische Leitfähigkeit der Schicht unerwünscht ist. Ein Artikel mit einer solchen Beschichtung kann beispielsweise im Bereich von Touchscreens zur Anwendung kommen.

Als Beispiele ist nachfolgend eine Pigmentierung aufgeführt, mit der Schichten auf Sol-Gel-Basis und Bornitrid als Festschmierstoff hergestellt werden können:
35 Gew% Bornitrid-Pulver mit einem D50-Wert von 7Mikrometern mit einer spezifischen Oberfläche von 4 bis 6 Quadratmeter pro Gramm,
5 Gew % plättchenförmiges glimmerbasiertes, mit TiO₂, Fe₂O₃ und SnO₂-vergütetes Effektpigment mit einer Teilchengrösse im Bereich von 5 bis 25 Mikrometer
60 Gew % plättchenförmiges, TiO₂- und SnO₂-vergütetes glimmerbasiertes Effektpigment mit einer Teilchengrösse im Bereich von 10 bis 60 Mikrometer.

Es werden exzellente Schichteigenschaften hinsichtlich der Haftfestigkeit, der Kratzfestigkeit sowie der Dichtigkeit der Beschichtung erhalten. In Verbindung mit einer geeigneten Versiegelungsschicht werden hervorragende Schichteigenschaften auch hinsichtlich der Dichtigkeit der Schicht sowie der Gesamtperformance in einer Kochfläche erzielt.

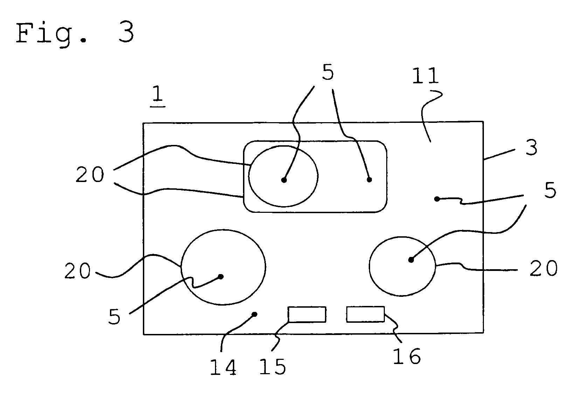

Fig. 3 zeigt eine Aufsicht auf einen erfindungsgemäß beschichteten Glaskeramik-Artikel 1 in Form eines Glaskeramik-Kochfelds. Die mit einer Versiegelungsschicht 11 versehene Dekorschicht 5 befindet sich auf der Unterseite 3 des Glaskeramik-Kochfelds 2. Das Kochfeld 2 weist mehrere Heizzonen oder Heissbereiche 20 auf, unter denen die Heizelemente (nicht dargestellt) angeordnet sind. Die Heizzonen 20 können beispielsweise durch Dekorschichten 5 unterschiedlicher Graufärbung und/oder Anmutung und/oder Zusammensetzung von der nicht beheizbaren Umgebung 14 abgegrenzt sein. Dies kann eine ästhetische Funktion oder auch eine die Heizzonen 20 kennzeichnende Funktion haben. Vorteilhafter Weise können auch Bereiche ohne Dekorschicht 15 und/oder ohne Versiegelungsschicht 16 ausgespart sein, so dass diese Bereiche beispielsweise als Sensorfelder und/oder auch für eine Anzeige verwendet werden können.

Dekorschicht 5 und Versiegelungsschicht 11 mit den erfindungsgemäßen Pigmentierungen sind nicht nur hinreichend temperaturstabil, sondern auch imstande, die von den Heizelementen erzeugt Wärme für das Garen auf dem Kochfeld ausreichend gut zu leiten. Es hat sich insbesondere gezeigt, dass die dekorative Beschichtung in den heißen Bereichen 20 ihr optisches Erscheinungsbild auch nach langem Betrieb nicht verändert.

Es ist dem Fachmann ersichtlich, dass die Erfindung nicht auf die vorstehend beschriebenen beispielhaften Ausführungsformen beschränkt ist, sondern vielmehr in vielfältiger Weise variiert werden kann. Insbesondere können die Merkmale der einzelnen Ausführungsbeispiele auch miteinander kombiniert werden.

## Patentansprüche

1. Verfahren zur Herstellung einer Versiegelungsschicht für Dekorschichten auf mindestens einer Seite eines Glas- oder Glaskeramik-Substrats, in dem in einem ersten Schritt die Dekorschicht mittels eines Sol-Gel-Verfahrens hergestellt wird, wobei die Schicht auf das Glas- oder Glaskeramik-Substrat aufgebracht und durch Einbrennen ausgehärtet wird, und in dem in einem zweiten Schritt
die Dekorschicht mit einer Versiegelungsschicht abgedeckt wird, die ebenfalls mittels eines Sol-Gel-Verfahrens hergestellt wird, wobei anorganische Dekorpigmente und Füllstoffe mit einem Sol vermischt werden, wobei die anorganischen Dekorpigmente plättchenförmige Pigment-Partikel und anorganische Festschmierstoff-Partikel umfassen, die in einem Verhältnis im Bereich von 10:1 bis 1:1 Gew.-%, bevorzugt 5:1 bis 1:1 Gew.-% und besonders bevorzugt 3:1 bis 1,5:1 Gew.-% zugegeben werden, und die erzeugte Mischung auf das Glaskeramik-Substrat mit der ausgehärteten Dekorschicht aufgebracht und anschließend bei erhöhten Temperaturen ausgehärtet wird.

2. Verfahren nach Anspruch 1, **dadurch gekennzeichnet, dass** dem Sol, das zur Erzeugung der Versiegelungsschicht verwendet wird, TiO₂-Pigmente zugegeben werden, die vorzugsweise unterschiedliche Querschnitte aufweisen und besonders bevorzugt Querschnitte von 50 bis 350 nm umfassen.

3. Verfahren nach einem der vorstehenden Ansprüche, **dadurch gekennzeichnet, dass** aus wenigstens dem Sol-Gel der Versiegelungsschicht, den anorganischen Pigmenten und den Füllstoffen eine Paste hergestellt wird, wobei die Paste mit Siebdruck auf das Glas- oder Glaskeramik-Substrat mit der eingebrannten Dekorschicht aufgetragen wird.

4. Verfahren nach mindestens einem der vorstehenden Ansprüche, **dadurch gekennzeichnet, dass** die auf die eingebrannte Dekorschicht aufgebrachte Paste bei Temperaturen von kleiner als 300°C ausgehärtet wird.

5. Glas- oder Glaskeramik-Artikel (1), insbesondere herstellbar mit einem Verfahren nach mindestens einem der vorstehenden Ansprüche, umfassend ein Glas- oder Glaskeramik-Substrat (2), das auf mindestens einer Seite (3, 4) mit einer Versiegelungsschicht (11) versehen ist, die eine Dekorschicht (5) abdeckt, wobei die Versiegelungsschicht (11) mindestens ein ausgehärtetes Sol-Gel-Bindemittel (9), anorganische Dekorpigmente (6, 7, 12) sowie Füllstoffe (8) enthält, wobei das ausgehärtete Sol-Gel-Bindemittel (9) der Versiegelungsschicht (11) an das ausgehärtete Sol-Gel-Bindemittel gebundene organische Bestandteile, die wasser- und fettabweisend sind, enthält und die anorganischen Pigmente plättchenförmige Pigment-Partikel und anorganische Festschmierstoff-Partikel in einem Verhältnis von 10:1 bis 1:1 Gew.-%, vorzugsweise 5:1 bis 1:1 Gew.-% und besonders bevorzugt 3:1 bis 1,5:1 Gew.-% umfassen.

6. Glas- oder Glaskeramik-Artikel (1) nach Anspruch 5, **dadurch gekennzeichnet, dass** die durchschnittliche größte Querschnittslänge der plättchenförmigen Pigmente zur Trockenschichtdicke der Versiegelungsschicht ein Verhältnis im Bereich von 10:1 bis 1:3 bevorzugt 8:1 bis 1:1besonders bevorzugt 6:1 bis 2:1 , aufweist.

7. Glas- oder Glaskeramik-Artikel (1) nach einem der vorstehenden Ansprüche, **dadurch gekennzeichnet, dass** die Versiegelungsschicht plättchenförmige Pigmente mit einem Aspektverhältnis von mindestens 5:1 enthält, wobei der größte Durchmesser der plättchenförmigen Pigmente zwischen 5 und 120 µm, bevorzugt zwischen 10 und 60 µm liegt.

8. Glas- oder Glaskeramik-Artikel (1) nach einem der vorstehenden Ansprüche, **dadurch gekennzeichnet, dass** das ausgehärtete Sol-Gel-Bindemittel (9) der Versiegelungsschicht (11) als plättchenförmige Pigmente (6) Glimmerplättchen und/oder Borosilikat-basierte Plättchen und/oder Glasflakes, insbesondere beschichtete Glimmer- und/oder beschichtete Borosilikat-basierte Plättchen und/oder beschichtete Glasflakes und/oder TiO₂-vergütete plättchenförmige Pigmente-enthält.

9. Glas- oder Glaskeramik-Artikel (1) nach einem der vorstehenden Ansprüche, **dadurch gekennzeichnet, dass** die Versiegelungsschicht als anorganischen Festschmierstoff Graphit und/oder Bornitrid und/oder ein anorganisches Nicht-Oxid, das eine geringe Oberflächenenergie aufweist, vorzugsweise eine Oberflächenenergie, welche höchstens 20% höher als die Oberflächenenergie von Graphit ist, enthält, wobei bei der Verwendung von Graphit vorzugsweise 90% des zugegebenen Graphits Korngrößen kleiner als 6 bis 19 µm hat.

10. Glas- oder Glaskeramik-Artikel (1) nach einem der vorstehenden Ansprüche, **dadurch gekennzeichnet, dass** das ausgehärtete Sol-Gel-Bindemittel der Versiegelungsschicht als anorganischen Festschmierstoff (6, 7) Graphit (7) in der Menge enthält, dass die erzeugte Versiegelungsschicht (5) einen Grauton, der im CIELAB-Farbsystem in einem die Werte L = 85 bis 30, a = -8 bis +8, b = -8 bis +8 umfassenden Bereich liegt, aufweist.

11. Glas- oder Glaskeramik-Artikel (1) nach mindestens einem der vorstehenden Ansprüche, **dadurch gekennzeichnet, dass** das ausgehärtete Sol-Gel-Bindemittel (9) der Versiegelungsschicht (11) plättchenförmige Pigmente (6) und anorganische Nicht-Oxide (7) im gleichen Gewichtsverhältnis und der gleichen Zusammensetzung wie das ausgehärtete Sol-Gel-Bindemittel der Dekorschicht enthält.

12. Glas- oder Glaskeramik-Artikel (1) nach einem der vorstehenden Ansprüche, **dadurch gekennzeichnet, dass** die erzeugte Versiegelungsschicht (11) einen Gewichtsanteil von Pigment (6, 7) und Füllstoffen (8) enthält, der höher als der Gewichtsanteil des ausgehärteten Sol-Gel-Bindemittels (9) ist, bevorzugt, bei welchem das ausgehärtete Sol-Gel-Bindemittel (9) höchstens einen Anteil von 40 Gew.-%, vorzugsweise höchstens 30 Gew.-% am Gesamtgewicht der erzeugten Versiegelungschicht hat.

13. Glas- oder Glaskeramik-Artikel (1), nach mindestens einem der vorstehenden Ansprüche, **dadurch gekennzeichnet, dass** die ausgehärtete Versiegelungsschicht (11) die gleiche Zusammensetzung wie die ausgehärtete Dekorschicht (5) hat, mit dem Unterschied, dass das Metalloxid-Netzwerk der Versiegelungsschicht (11) mehr, bezogen auf die Anzahl der organischen Reste vorzugsweise mindestens 5 % mehr organische Reste als das Metalloxid-Netzwerk der Dekorschicht (5) enthält.

14. Glaskeramik-Kochfeld, umfassend einen Glaskeramik-Artikel (1) nach mindestens einem der Ansprüche 5 bis 13.

15. Glaskeramik-Kochfeld nach Anspruch 14 **dadurch gekennzeichnet, dass** die Versiegelungsschicht (11) auch zumindest eine Heizzone (12) des Kochfelds bedeckt.

## Claims

1. A method for producing a sealing layer for decorative layers on at least one side of a glass or glass-ceramic substrate, in which, in a first step, the decorative layer is produced by means of a sol-gel process, the layer being deposited on the glass or glass-ceramic substrate and is hardened by baking in, and in which, in a second step,
the decorative layer is covered with a sealing layer, which is also produced by means of a sol-gel process, wherein inorganic decorative pigments and fillers are mixed with a sol, wherein the inorganic decorative pigments comprise flake-form pigment particles and inorganic solid lubricant particles, which are added in a ratio in the range of 10:1 to 1:1 wt %, preferably 5:1 to 1:1 wt %, and especially preferably 3:1 to 1.5:1 wt %, and the produced mixture is applied onto the glass-ceramic substrate with the hardened decorative layer and subsequently is hardened at elevated temperatures.

2. The method according claim 1, **characterized in that** TiO₂ pigments, which preferably have different cross sections and especially preferably comprise cross sections of 50 to 350 nm, are added to the sol that is used to produce the sealing layer.

3. The method according to one of the preceding claims, further **characterized in that** a paste is produced from at least the sol-gel of the sealing layer, the inorganic pigments, and the fillers, wherein the paste is applied by means of screen printing or serigraphy onto the glass or glass-ceramic substrate having the baked-in decorative layer.

4. The method according to at least one of the preceding claims, **characterized in that** the paste applied on the baked-in decorative layer is hardened at temperatures of less than 300°C.

5. A glass or glass-ceramic article (1), which can, in particular, be produced by means of a method according to at least one of the preceding claims, comprising a glass or glass-ceramic substrate (2), which is provided with a sealing layer (11) on at least one side (3, 4), which covers a decorative layer (5), wherein the sealing layer (11) contains at least one hardened sol-gel binding agent (9), inorganic decorative pigments (6, 7, 12), and fillers (8), wherein the hardened sol-gel binding agent (9) of the sealing layer (11) contains organic components that are bound to the hardened sol-gel binding agent and are water- and oil-repelling, and wherein the inorganic pigments comprise flake-form pigment particles and inorganic solid lubricant particles in a ratio of 10:1 to 1:1 wt %, preferably 5:1 to 1:1 wt %, and especially preferably 3:1 to 1.5:1 wt %.

6. The glass or glass-ceramic article (1) according to claim 5, **characterized in that** the average largest cross-sectional length of the flake-form pigments has a ratio to the dry layer thickness of the sealing layer that lies in a range of 10:1 to 1:3, preferably 8:1 to 1:1, especially preferably 6:1 to 2:1.

7. The glass or glass-ceramic article (1) according to one of the preceding claims, **characterized in that** the sealing layer contains flake-form pigments with an aspect ratio of at least 5:1, wherein the largest diameter of the flake-form pigments lies between 5 and 120 µm, preferably between 10 and 60 µm.

8. The glass or glass-ceramic article (1) according to one of the preceding claims, **characterized in that** the hardened sol-gel binding agent (9) of the sealing layer (11) contains, as flake-form pigments (6), mica flakes and/or borosilicate-based flakes and/or glass flakes, in particular, coated mica flakes and/or coated borosilicate-based flakes and/or coated glass flakes and/or TiO₂ tempered plate-form pigments.

9. The glass or glass-ceramic article (1) according to one of the preceding claims, **characterized in that** the sealing layer contains, as inorganic solid lubricant, graphite and/or boron nitride and/or an inorganic non-oxide, which has a low surface energy, preferably a surface energy that is at most 20% higher than the surface energy of graphite, wherein, when graphite is used, 90% of the added graphite preferably has particle sizes smaller than 6 to 19 µm.

10. The glass or glass-ceramic article (1) according to one of the preceding claims, **characterized in that** the hardened sol-gel binding agent of the sealing layer contains, as inorganic solid lubricant (6, 7), graphite (7) in a quantity such that the produced sealing layer (5) has a gray hue that lies, in the CIELAB colour system, in a range comprising the values L = 85 to 30, a = -8 to +8, b = -8 to +8.

11. The glass or glass-ceramic article (1) according to at least one of the preceding claims, **characterized in that** the hardened sol-gel binding agent (9) of the sealing layer (11) contains flake-form pigments (6) and inorganic non-oxides (7) in the same weight ratio and the same composition as the hardened sol-gel binding agent of the decorative layer.

12. The glass or glass-ceramic article (1) according to one of the preceding claims, **characterized in that** the produced sealing layer (11) contains a weight fraction of pigments (6, 7) and fillers (8) that is greater than the weight fraction of the hardened sol-gel binding agent (9), preferably for which the hardened sol-gel binding agent (9) has at most a fraction of 40 wt %, preferably at most 30 wt % of the total weight of the produced sealing layer.

13. The glass or glass-ceramic article (1) according to at least one of the preceding claims, **characterized in that** the hardened sealing layer (11) has the same composition as the hardened decorative layer (5), with the difference that the metal oxide network of the sealing layer (11) contains more organic residues, preferably at least 5% more organic residues, in relation to the number of organic residues, than the metal oxide network of the decorative layer (5).

14. A glass-ceramic cooktop, consisting of a glass-ceramic article (1) according to at least one of claims 5 to 13.

15. The glass-ceramic cooktop according to claim 14, **characterized in that** the sealing layer (11) also covers at least one heating zone (12) of the cooktop.

## Revendications

1. Procédé de préparation d'une couche de scellement pour des couches de décor sur au moins une face d'un substrat en verre ou en vitrocéramique, dans lequel, au cours d'une première étape, la couche de décor est préparée au moyen d'un procédé sol - gel, dans lequel la couche est déposée sur le substrat en verre ou en vitrocéramique et est durcie par calcination, et dans lequel, au cours d'une deuxième étape, la couche de décor est recouverte d'une couche de scellement, qui est préparée également au moyen d'un procédé sol - gel, des pigments de décor inorganiques et des charges étant mélangés avec un sol, les pigments de décor inorganiques comprenant des particules de pigment lamellaires et des particules de lubrifiant solide inorganiques qui sont ajoutées en un rapport situé dans la plage allant de 10/1 à 1/1 % en poids, de préférence de 5/1 à 1/1 % en poids et particulièrement préférentiellement de 3/1 à 1,5/1 % en poids, et le mélange produit est déposé sur le substrat en vitrocéramique avec la couche de décor durcie, et est durci ensuite à températures élevées.

2. Procédé selon la revendication 1, **caractérisé en ce que** des pigments de TiO₂ qui présentent de préférence différentes sections transversales et, particulièrement préférentiellement, des sections transversales de 50 à 350 nm sont ajoutés au sol qui est utilisé pour la production de la couche de scellement.

3. Procédé selon l'une des revendications précédentes, **caractérisé en ce que** l'on prépare une pâte à partir d'au moins le sol - gel de la couche de scellement, les pigments inorganiques et les charges, la pâte étant déposée par sérigraphie sur le substrat en verre ou en vitrocéramique avec la couche de décor calcinée.

4. Procédé selon l'une des revendications précédentes, **caractérisé en ce que** la pâte déposée sur la couche de décor calcinée est durcie à des températures inférieures à 300°C.

5. Article en verre ou en vitrocéramique (1), pouvant être en particulier fabriqué par un procédé selon au moins l'une des revendications précédentes, comprenant un substrat en verre ou en vitrocéramique (2), qui est doté au moins sur une face (3, 4) d'une couche de scellement (11), qui recouvre une couche de décor (5), la couche de scellement (11) comprenant au moins un liant sol - gel durci (9), des pigments de décor inorganiques (6, 7, 12) ainsi que des charges (8), le liant sol - gel durci (9) de la couche de scellement (11) comprenant des composants organiques liés au liant sol - gel durci, qui sont hygrophobes et lipophobes, et les pigments inorganiques comprenant des particules de pigments lamellaires et des particules de lubrifiant solide inorganiques en un rapport de 10/1 à 1/1 % en poids, de préférence de 5/1 à 1/1 % en poids et particulièrement préférentiellement de 3/1 à 1,5/1 % en poids.

6. Article en verre ou en vitrocéramique (1) selon la revendication 5, **caractérisé en ce que** la longueur transversale moyenne la plus grande des pigments lamellaires par rapport à l'épaisseur de couche sèche de la couche de scellement présente un rapport situé dans la plage de 10/1 à 1/3, de préférence de 8/1 à 1/1, particulièrement préférentiellement de 6/1 à 2/1.

7. Article en verre ou en vitrocéramique (1) selon l'une des revendications précédentes, **caractérisé en ce que** la couche de scellement contient des pigments lamellaires ayant un rapport d'aspect d'au moins 5/1, le diamètre le plus gros des pigments lamellaires étant situé entre 5 et 120 µm, de préférence entre 10 et 60 µm.

8. Article en verre ou en vitrocéramique (1) selon l'une des revendications précédentes, **caractérisé en ce que** le liant sol - gel durci (9) de la couche de scellement (11) contient comme pigments lamellaires (6) des lamelles de mica et/ou des lamelles à base de borosilicate et/ou des paillettes de verre, en particulier des lamelles revêtues à base de mica et/ou à base de borosilicate et/ou des paillettes de verre revêtues et/ou des pigments lamellaires traités avec du TiO₂.

9. Article en verre ou en vitrocéramique (1) selon l'une des revendications précédentes, **caractérisé en ce que** la couche de scellement contient comme lubrifiant solide inorganique du graphite et/ou du boronitrure et/ou un non oxyde inorganique qui présente une faible énergie de surface, de préférence une énergie de surface qui est au maximum 20 % supérieure à l'énergie de surface du graphite, de préférence 90 % du graphite ajouté ayant des tailles de grain inférieures à la plage allant de 6 à 19 µm en cas d'utilisation du graphite.

10. Article en verre ou en vitrocéramique (1) selon l'une des revendications précédentes, **caractérisé en ce que** le liant sol - gel durci de la couche de scellement contient du graphite (7) comme lubrifiant solide inorganique (6, 7) en la quantité où la couche de scellement (5) produite présente un niveau de gris qui se situe dans le système chromatique CIELAB en une plage comprenant les valeurs L = 85 à 30, a = -8 à +8, b = -8 à +8.

11. Article en verre ou en vitrocéramique (1) selon au moins une des revendications précédentes, **caractérisé en ce que** le liant sol - gel durci (9) de la couche de scellement (11) comprend des pigments lamellaires (6) et des non-oxydes inorganiques (7) en un rapport en poids égal et en la même composition que le liant sol - gel de la couche de décor.

12. Article en verre ou en vitrocéramique (1) selon l'une des revendications précédentes, **caractérisé en ce que** la couche de scellement (11) produite comprend une fraction en poids de pigments (6, 7) et des charges (8) qui est supérieure à la proportion en poids du liant sol - gel durci (9), de préférence dans lequel le liant sol - gel durci (9) constitue au maximum une proportion de 40 % en poids, de préférence au maximum 30 % en poids sur le poids total de la couche de scellement produite.

13. Article en verre ou en vitrocéramique (1) selon au moins une des revendications précédentes, **caractérisé en ce que** la couche de scellement (11) durcie a la même composition que la couche de décor durcie (5), à la différence que le réseau d'oxyde métallique de la couche de scellement (11) comprend plus, par rapport au nombre de radicaux organiques, de préférence au moins 5 % en plus de radicaux organiques que le réseau d'oxyde métallique de la couche de décor (5).

14. Plaque de cuisson en vitrocéramique, comprenant un article en vitrocéramique (1) selon au moins l'une des revendications 5 à 13.

15. Plaque de cuisson en vitrocéramique selon la revendication 14, caractérisée en ce la couche de scellement (11) recouvre aussi au moins une zone de chauffage (12) de la plaque de cuisson.
